(19) Europäisches Patentamt
European Patent Office
Office européen des brevets

(11) EP 4 457 281 B1

(12) EUROPEAN PATENT SPECIFICATION

(45) Date of publication and mention of the grant of the patent:
**10.12.2025 Bulletin 2025/50**

(21) Application number: **21848093.7**

(22) Date of filing: **28.12.2021**

(51) International Patent Classification (IPC):
***C08L 7/00** (2006.01)* ***C08L 9/00** (2006.01)*
***B60C 1/00** (2006.01)* ***C08L 61/06** (2006.01)*
***C08K 5/1515** (2006.01)* ***C08K 3/04** (2006.01)*
***C08L 61/14** (2006.01)*

(52) Cooperative Patent Classification (CPC):
(C-Sets available)
**C08L 7/00; C08L 9/00** (Cont.)

(86) International application number:
**PCT/US2021/065373**

(87) International publication number:
**WO 2023/129137 (06.07.2023 Gazette 2023/27)**

# (54) METHOD FOR PREPARING HIGH RIGIDITY RUBBER COMPOSITION WITH LOW FORMALDEHYDE CONTENT

VERFAHREN ZUR HERSTELLUNG EINER KAUTSCHUKZUSAMMENSETZUNG MIT HOHER STEIFIGKEIT UND NIEDRIGEM FORMALDEHYDGEHALT

PROCÉDÉ DE PRÉPARATION D’UNE COMPOSITION DE CAOUTCHOUC À HAUTE RIGIDITÉ À FAIBLE TENEUR EN FORMALDÉHYDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.11.2024 Bulletin 2024/45**

(73) Proprietor: **COMPAGNIE GENERALE DES ETABLISSEMENTS MICHELIN**
**63000 Clermont-Ferrand (FR)**

(72) Inventors:
- **AYLOR, Jena**
  **Greenville, South Carolina 29605 (US)**
- **YANG, Xiaofeng Shaw**
  **Greenville, South Carolina 29605 (US)**

(74) Representative: **Casalonga**
**Casalonga & Partners**
**Bayerstraße 71/73**
**80335 München (DE)**

(56) References cited:
**WO-A1-2018/125643** **US-A1- 2015 225 551**
**US-B2- 8 877 839**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 7/00, C08L 9/00, C08L 61/06, C08L 91/00, C08K 5/1515, C08K 3/04;**
**C08L 7/00, C08L 9/00, C08L 61/06, C08L 91/00, C08L 61/14, C08K 3/04;**
**C08L 7/00, C08L 61/06, C08L 91/00, C08K 5/1515, C08K 3/04;**
**C08L 7/00, C08L 61/06, C08L 91/00, C08L 61/14, C08K 3/04;**
**C08L 9/00, C08L 7/00, C08L 61/06, C08L 91/00, C08K 5/1515, C08K 3/04;**
**C08L 9/00, C08L 7/00, C08L 61/06, C08L 91/00, C08L 61/14, C08K 3/04**

## Description

### FIELD OF THE INVENTION

The subject matter of the present invention relates to a rubber composition having excellent properties and a lower formaldehyde content.

### BACKGROUND OF THE INVENTION

Tires and other articles that are made of rubber are manufactured from rubber compositions that include rubber, e.g., natural rubber, synthetic rubber or combinations thereof, as well as fillers, plasticizers, vulcanizing agents and other chemicals that improve the physical characteristics of the cured rubber composition. One class of materials that may be added to the rubber compositions is a reinforcing resin system. For tire applications, the reinforcing resin systems are added to a rubber composition mainly to increase the rigidity of the cured rubber composition without significant impact on other required performance properties such as elongation for endurance and viscosity for processing.

Conventionally, many of these reinforcing resin systems in rubber compositions are composed of two parts, a phenolic and/or resorcinol reinforcing resin and a linking agent, generally referred to as the methylene acceptor and methylene donor, respectively. Conventionally, the most widely used methylene acceptors are phenolic and/or resorcinol resins, which are the pre-condensed products of various substituted phenols and/or resorcinol's with aldehydes, while the commonly used methylene donors are hexamethylenetetramine (HMT) and/or hexamethoxymethylmelamine (H3M), which are all well known to those skilled in the art.

These methylene acceptors and donors intermix with the rubber polymer chains and other composition components. Upon heating at higher temperature such as tire curing, and as hypothesized, the methylene donors generate formaldehyde molecules, which link the adjacent phenyl rings, predominately at the available active sites that are *otho*- and/or *para*- to the corresponding hydroxyl groups in the resin molecules. This action forms a three-dimensional network, increases the rigidity, and improves the physical characteristics of the cured rubber composition. Other advantages of using these methylene donor/acceptor systems include the excellent cured elongation and low uncured viscosity of the rubber composition; the former is advantageous to the endurance of the end product, and the latter is generally needed for proper shaping or processing of the rubber before curing.

However, the existing problem with the methylene donor/acceptor system today is that formaldehyde is currently listed as an SVHC, Substances of Very High Concern, and is included in the Annex XIV. Meanwhile, it was recently claimed that some unreacted trace of H3M in tire and road wear particles may have contributed to the mortality rate of Coho salmon, ref. Peters et al, Environ. Sci. Technol., 52(18), pp 10317-10327, 2018.

Rubber compounders strive to find alternatives to provide consumers with rubber compositions of not only high performances but also environmentally friendly products. Therefore, it is desirable either to replace the current system of methylene donor/acceptor, or at least to replace the formaldehyde-generating methylene donor. Along the lines of lower formaldehyde compositions and formaldehyde-free compositions, various options were proposed, for example, US8,877,839 discloses the use of a reinforcing resin system that comprises an epoxide resin and a polyamine-based linking agent in rubber composition, while US9,975,377 teaches the use of epoxide and polyamine linking agent for adhesion of rubber to textile/metallic cords in tire applications.

CN102690470 teaches a tire innerliner composition for improved impermeability comprising 5-20 parts of phenolic resin, 1-10 parts of epoxy resin, 0.5-5 parts of peroxide, and other components. However, this innerliner composition also comprises 5-95 parts of brominated or chlorinated butyl rubber, 5-95 parts of chlorosulfonated polyethylene rubber, both of which are not "highly unsaturated".

On the other hand, though not for rubber composition, particularly not for tire rubber composition, the reaction of phenolic resins with phenolic epoxides has been reported and studied elsewhere for various other purposes. For example, EP1854819 teaches an epoxy resin composition and the method making the same, comprising an epoxy resin and a phenol resin as a curing agent. JP7039471 describes a sealing resin composition that is comprised of an epoxy resin, a novolac phenolic resin, and a silylated butadiene rubber. EP2582754 discloses a coated textile adhesion promoter selected from formaldehyde-resorcinol condensate and/or resin, formaldehyde-phenol condensate, novolac resins, resole resins, and multifunctional epoxy resin, novolac modified epoxy resin, isocyanate compounds, blocked isocyanate resin or compounds, halogenated resorcinol-formaldehyde resin, phenolic resins, halogenated phenolic resins, melamine-formaldehyde resins, vinylpyridine rubber latex, methylene donors such as hexamethylenetetramine and hexamethoxymethylmelamine, organofunctional silanes, and mixtures thereof. Kasemsiri et al, Polymers 10(5), 482 (2018), studied the shape memory and self-welding of the reaction product of epoxy phenolic novolac (EPN) and cashew nutshell liquid (CNSL) filled with carbon nanotubes. US8877839 relates to a method to prepare a rubber composition exhibiting high rigidity, which does not result in the formation of formaldehyde during the curing.

In this invention, it was surprisingly found that some special phenolic epoxides, which are normally environmentally friendly and do not generate formaldehyde during high temperature curing, were able to link the phenolic resin molecules to rigidify the rubber compositions without significant impact on other required performance parameters such as elongation for endurance and viscosity for processing.

## SUMMARY OF THE INVENTION

A rubber composition having little or no formaldehyde content and comprised of phenolics and phenolic epoxide and the process to make such a rubber composition is disclosed herein. The disclosed compositions have a lower formaldehyde content than the rubber compositions used generally for the production of tires and may even have such little or no formaldehyde content to be considered formaldehyde-free. Aspects and advantages of the invention will be set forth in part in the following description, or may be obvious from the description, or may be learned through practice of the invention.

In one exemplary embodiment, a method of making a cross-linkable elastomer composition comprising: mixing a highly unsaturated diene elastomer; a reinforcing filler; a reinforcing resin system comprising: a phenolic resin and a phenolic epoxide; wherein the functionality ratio, of the total epoxy groups in (II) to the total hydroxyl groups in (I) is from 0.05 to 5; wherein no methylene donors are used that generate formaldehyde during curing.

In another exemplary embodiment, the method of making the elastomer composition according to the paragraph above further comprising mixing in a vulcanization package.

In another exemplary embodiment, the method of making the elastomer composition according to either of the two paragraphs above, wherein the highly unsaturated diene elastomer is selected from NR, BR, SBR, or combinations thereof.

In another exemplary embodiment, the method of making the elastomer composition according to any one of the above three paragraphs, wherein the filler is from 10 to 100 phr, and selected from a carbon black, a silica, or combinations thereof.

In another exemplary embodiment, a method of making a cross-linkable elastomer composition comprising: mixing a highly unsaturated diene elastomer; a reinforcing filler; a phenolic resin forming a non-productive mix composition. The non-productive mix composition is then further worked by mixing in and a phenolic epoxide; wherein the functionality ratio, of the total epoxy groups in (II) to the total hydroxyl groups in (I) is from 0.05 to 5; mixing in a vulcanization package to form a productive mix; wherein no methylene donors are used that generate formaldehyde during curing.

In yet another exemplary embodiment, which is a tire comprised of the elastomer composition as described in any one of the above paragraphs.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## DETAILED DESCRIPTION OF THE INVENTION

The present invention provides an environmentally friendlier high performance rubber composition. The formulation greatly reduces, even eliminating, formaldehyde in the rubber composition by utilizing a reinforcing resin system comprising of a phenolic resin and a phenolic epoxide as described herein. It should be understood that although the reactions shown here in accordance with the invention will not create a formaldehyde byproduct, trace amounts of formaldehyde may be found in the raw materials used. Hence, the system shown may be considered "formaldehyde free", despite trace amounts of formaldehyde that may be found in the end product.

For purposes of describing the invention, reference now will be made in detail to embodiments and methods of the invention. Each example is provided by way of explanation of the invention, not limitation of the invention.

Mooney viscosity is measured in accordance with ASTM Standard D1646. In general, the composition in an uncured state is molded in a cylindrical enclosure and heated to 100°C. After 1 minute of preheating, the rotor turns within the test sample at 2 rpm, and the torque used for maintaining this movement is measured after 4 minutes of rotation. The Mooney viscosity is expressed in "Mooney units" (MU, with 1 MU=0.83 Newton-meter). In general, the lower the Mooney viscosity, the easier the uncured products are to be processed.

Mooney scorch is measured in accordance with ASTM Standard D1646 at 130 °C. In general, Mooney scorch is reported as the time required for the viscosity to rise a set number of Mooney units above the minimum viscosity at the measured temperature.

MDR rheometer and Rubber Curing: The curing characteristics of the rubber compositions are conducted by using MDR (moving die rheometer) according to ASTM Standard D2084. The test is conducted at 150°C. Based on the MDR rheometer, the curing time is generally defined as the time that the MDR torque reaches a maximum. The rubber samples are then cured in a platen press at 150°C for the predefined curing times, and the following tests will be conducted

on the cured samples. Other curing temperatures could be used, for example, lower or higher than 150°C. With lower temperature, a longer cure time is needed and with higher temperature a shorter time would be used.

Moduli MA10 and MA100: Moduli (MPa) of elongation were measured at 10% (MA10) and 100% (MA100) at a temperature of 23 °C based on ASTM Standard D412 on dumb bell test pieces. The measurements were taken in the second elongation, i.e., after an accommodation cycle. These measurements are secant moduli in MPa, based on the original cross section of the test piece. Generally, MA10 value at lower strain is a representation of the rigidity the rubber composition.

Shore A hardness is measured at 23°C according to ASTM Standard D2240. As MA10 in the elongation test, Shore A is another property characterizing the rigidity of the rubber composition.

Hysteresis loss HL60 is measured in percent by rebound at 60°C at the sixth impact in accordance with the following equation:

$$HL\ (\%) = 100\ (W_0 - W_1)/W_1 \qquad (1)$$

where $W_0$ is the energy supplied and $W_1$ is the energy restored.

Break elongation and break stress: The elongation properties were measured as break elongation at (%) and the corresponding elongation stress (MPa), which were measured at 23°C in accordance with ASTM Standard D412 on ASTM C test pieces.

The rubber composition may be described as a productive mix, one having a vulcanizing system, or a non-productive mix, one lacking the vulcanizing system. The cross-linkable rubber composition includes a highly unsaturated diene elastomer; a reinforcing filler; a vulcanization package; and a reinforcing resin system comprising: 1) a phenolic resin in the amount of 1 to 20 phr, parts per hundred rubber, having the following structure (I),

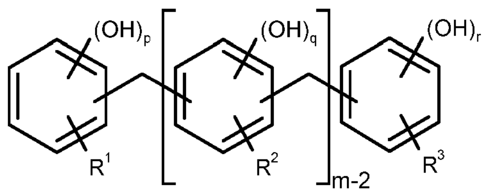

(I)

wherein p, q, r can be the same or different and are 1 or 2; m is 3 to 13; each of $R^1$, $R^2$, and $R^3$ can be the same or different, and is selected from of a hydrogen, an alkyl moiety, an alkenyl moiety, a cardanol moiety, or combinations thereof; and 2) a phenolic epoxide having the following structure (II),

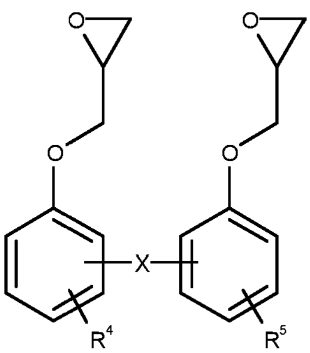

(II)

wherein X is selected from an alkyl moiety, an alkenyl moiety, an aryl moiety, a phenol moiety, a phenolic epoxide moiety, or combinations thereof; each of $R^4$ and $R^5$ can be the same or different, and is selected from a hydrogen, an alkyl moiety, an alkenyl moiety, an aryl moiety, a phenol moiety, a phenolic epoxide moiety, or combinations thereof; where the functionality ratio FR, or the mole ratio of the total epoxy groups in (II) to the total hydroxyl groups in (I) is from 0.05 to 5; and where no methylene donors that generate formaldehyde during curing.

This rubber composition is particularly suitable for tires, including automotive passenger tires, light truck tires and heavy truck tires such as found on semi-trucks and trailers. Rubber tires are generally comprised of compounds having different compositions formulated to perform in the particular part of the tire in which the compound if found. For example, a wear resistant formulation may be particularly suitable for use in the outer tread layer, or a scrub or tear resistant formulae may be particularly suitable for use in the exterior sidewall of the tire. The rubber composition disclosed herein may be used

in any location, and is particularly useful as a composition forming tire treads, tire beads, and tire belt skims.

Highly Unsaturated Diene Elastomer: The rubber elastomers suitable for use with particular embodiments of the present invention include highly unsaturated diene elastomers, for example, polybutadiene rubber (BR), polyisoprene rubber (IR), natural rubber (NR), and mixtures of these elastomers. The polyisoprenes include synthetic cis-1,4 polyisoprene, which may be characterized as possessing cis-1,4 bonds at more than 90 mol.% or alternatively, at more than 98 mol.%. Particular embodiments of the disclosed rubber compositions include only natural rubber.

Also suitable for use in particular embodiments of the present invention are rubber elastomers that are copolymers and include, for example, butadiene-styrene copolymers (SBR), butadiene-isoprene copolymers (BIR), isoprene-styrene copolymers (SIR) and isoprene-butadiene-styrene copolymers (SBIR) and mixtures thereof.

The highly unsaturated diene elastomer can be a single highly unsaturated diene elastomer, or a blend of various unsaturated diene elastomers, with a total of 100 phr, parts per hundred rubber. For example, the blend may be comprised of NR, BR, and SBR.

More specifically, the rubber elastomer does not include those that are not highly unsaturated or predominately saturated rubbers such as ethylene propylene diene monomer rubber (EPDM) and isobutylene-isoprene rubber (IIR).

Reinforcing Filler: The reinforcing fillers include carbon black and silica with the associated silane chemistry.

Carbon black, which is an organic filler, is well known to those having ordinary skill in the rubber compounding field. The carbon black included in the rubber compositions produced by the methods disclosed herein may, in particular embodiments for example, be in an amount of between 10 phr and 150 phr or alternatively between 20 phr and 100 phr or between 30 phr and 80 phr. Suitable carbon blacks are any carbon blacks known in the art and suitable for the given purpose for example, any carbon black having a BET surface area or a specific CTAB surface area both of which are less than 400 $m^2/g$ or alternatively, between 10 and 200 $m^2/g$ may be suitable for particular embodiments based on the desired properties of the cured rubber composition. The CTAB specific surface area is the external surface area determined in accordance with Standard AFNOR-NFT-45007 of November 1987. Suitable carbon blacks of the type HAF, ISAF and SAF, for example, are conventionally used in tire treads. Non-limitative examples of carbon blacks include, for example, the N115, N134, N234, N299, N326, N330, N339, N343, N347, N375 and the 600 series of carbon blacks, including, but not limited to N630, N650 and N660 carbon blacks, as well as the 900 series of carbon blacks including N990.

As noted above, silica may also be useful as reinforcement filler. The silica may be any reinforcing silica known to one having ordinary skill in the art including, for example, any precipitated or pyrogenic silica having a BET surface area and a specific CTAB surface area both of which are less than 450 $m^2/g$ or alternatively, between 10 and 400 $m^2/g$ may be suitable for particular embodiments based on the desired properties of the cured rubber composition. Particular embodiments of rubber compositions disclosed herein may include a silica having a CTAB of between 80 and 200 $m^2/g$, between 100 and 190 $m^2/g$, between 120 and 190 $m^2/g$ or between 140 and 180 $m^2/g$.

When silica is added to the rubber composition, a proportional amount of a silane coupling agent is also added to the rubber composition. The silane coupling agent is a sulfur-containing organosilicon compound that reacts with the silanol groups of the silica during mixing and with the elastomers during vulcanization to provide improved properties of the cured rubber composition. A suitable coupling agent is one that is capable of establishing a sufficient chemical and/or physical bond between the inorganic filler and the diene elastomer; which is at least bifunctional, having, for example, the simplified general formula "Y-T-X", in which: Y represents a functional group ("Y" function) which is capable of bonding physically and/or chemically with the inorganic filler, such a bond being able to be established, for example, between a silicon atom of the coupling agent and the surface hydroxyl (OH) groups of the inorganic filler (for example, surface silanols in the case of silica); X represents a functional group ("X" function) which is capable of bonding physically and/or chemically with the diene elastomer, for example by means of a sulfur atom; T represents a divalent organic group making it possible to link Y and X.

Other reinforcing fillers may also be included, for example, graphene, graphite, zeolite, and so forth.

Vulcanization System: For productive mixes, a vulcanization system is included. The vulcanization system is preferably, for particular embodiments, one based on sulfur and on an accelerator but other vulcanization agents known to one skilled in the art may be useful as well, for example, peroxide and ionic crosslinking agents. Vulcanization agents as used herein are those materials that cause the cross-linkage of the rubber and therefore may be added only to the productive mix so that premature curing does not occur, such agents including, for example, elemental sulfur, sulfur donating agents, and peroxides. Use may be made of any compound capable of acting as an accelerator of the vulcanization of elastomers in the presence of sulfur, in particular those chosen from the group consisting of 2-mercaptobenzothiazyl disulfide (abbreviated to "MBTS"), N-cyclohexyl-2-benzothiazolesulphenamide (abbreviated to "CBS"), N,N-dicyclohexyl-2-benzothiazolesulphenamide (abbreviated to "DCBS"), N-tert-butyl-2-benzothiazolesulphenamide (abbreviated to "TBBS"), N-tert-butyl-2-benzothiazole-sulphenimide (abbreviated to "TBSI") and the mixtures of these compounds. Preferably, a primary accelerator of the sulfenamide type is used.

The rubber composition may also include vulcanization retarders, a vulcanization system based, for example, on sulfur or on a peroxide, vulcanization accelerators, vulcanization activators, and so forth. The vulcanization system may further include various known secondary accelerators or vulcanization activators, such as zinc oxide, stearic acid and

guanidine derivatives (in particular diphenylguanidine, or "DPG").

It may be desirable for a non-productive mix be created prior to the addition of the vulcanization system. In such embodiments, the vulcanization system is not added, but instead may be added later to subsequently create a productive mix.

Reinforcing Resin System: A reinforcing resin system is herein described and is comprised of a phenolic resin and a phenolic epoxide.

Phenolic Resin: For the purposes of this invention, a phenolic resin is defined as having the following generic structure,

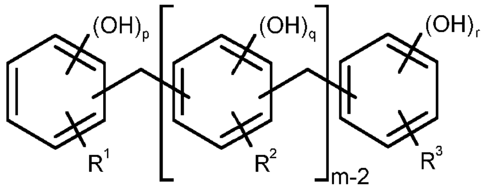

(I)

wherein p, q, r can be the same or different and are 1 or 2; m is 3 to 13; each of $R^1$, $R^2$, and $R^3$ can be the same or different, and is selected from a hydrogen, an alkyl moiety, an alkenyl moiety, a cardanol moiety, or combinations thereof.

When p, q, and r are all 1, the resin becomes a "phenolic resin" having 1 hydroxyl group on each of the phenyl ring, which often referred as Novolac or Novolac Resin or Phenolic Formaldehyde Resin in the resin industry. When some of the p, q, or r are 2, the resin becomes a phenolic-resorcinol resin; and when all the p, q, or r are 2, it becomes a resorcinol resin.

It is noted that m can be from 3 to 13; preferably 4 to 10; and more preferably 5 to 8. If m is too small, e.g., less than 4, the resin's cured rigidification after linking with the undermentioned phenolic epoxide could be low. On the other hand, if m is too big, e.g., greater than 12, the resultant rubber composition could have a higher uncured viscosity, which is disadvantageous for shaping or processing the rubber composition before curing.

The choices of $R^1$, $R^2$, and $R^3$ and their relative positions on the corresponding phenyl rings in respect to the hydroxyl groups can be used to modify the resin's characteristics, for example, to improve the elongation and processing parameters of the rubber composition.

The relative positions of the methylene groups -CH2- in respect to the corresponding hydroxyl groups on the phenyl rings can further define the exact characteristics of the phenolic resin.

Depending on the choices of p, q, r, m, $R^1$, $R^2$, $R^3$, and the relative positions of the bonds in reference to the hydroxyl groups, various phenolic resins can be used in the rubber composition in this invention. For example, the following phenolic resins can be useful in rubber compositions when combined with phenolic epoxide,

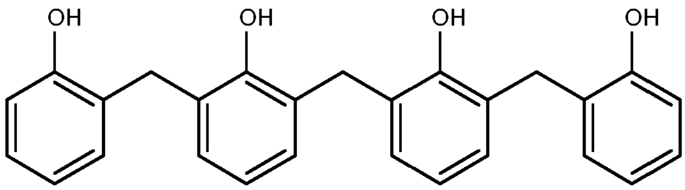

(I-1)

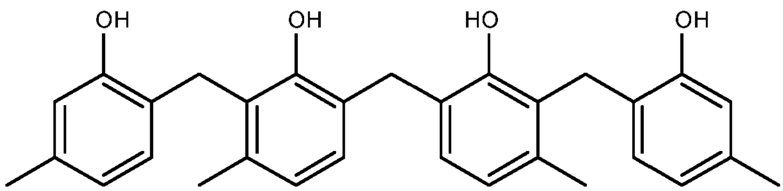

(I-2)

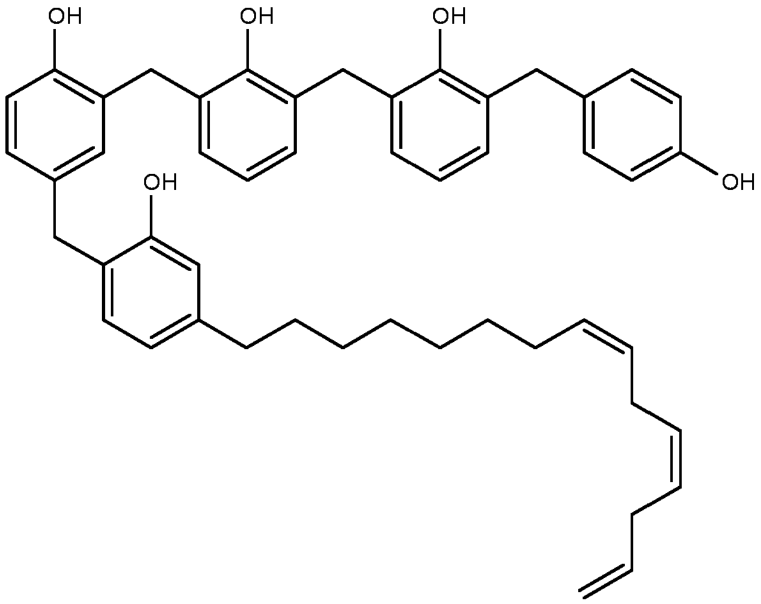

(I-3)

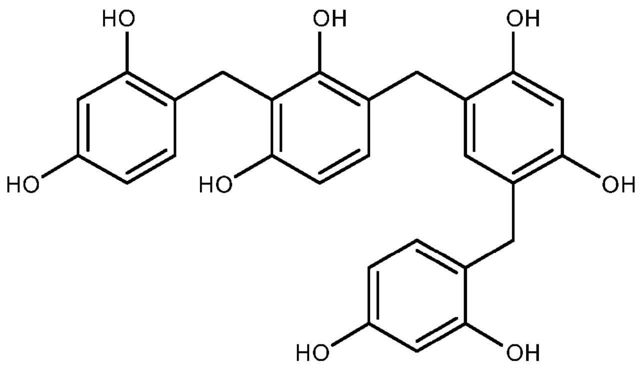

(I-4)

Phenolic epoxide: An epoxide refers to a cyclic ether with a three-atom ring, as shown below.

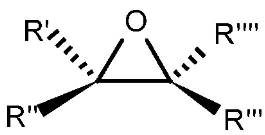

(2)

A compound containing the epoxide functional group can be called an epoxy, epoxide, oxirane, and ethoxyline. Meanwhile, the word "epoxy" is also referring the family of basic components or cured end products of epoxy resins. Epoxy resins, also known as polyepoxides, are a class of reactive prepolymers and polymers which contain epoxide groups. The epoxide functional group is also collectively called epoxy.

In this invention, a "phenolic epoxide" is defined as having the following structure (II),

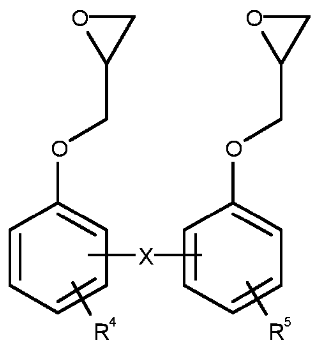

(II)

wherein X is selected from an alkyl moiety, an alkenyl moiety, an aryl moiety, a phenol moiety, a phenolic epoxide moiety, or combinations thereof; each of; $R^4$ and $R^5$ can be the same or different, and are selected from a hydrogen, an alkyl moiety, an alkenyl moiety, an aryl moiety, a phenol moiety, a phenolic epoxide moiety, or combinations thereof.

Below are some phenolic epoxides that could be useful in rubber compositions such as in tire applications.

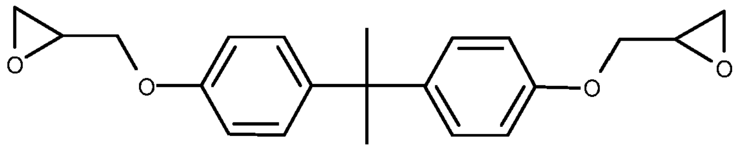

(II-1)

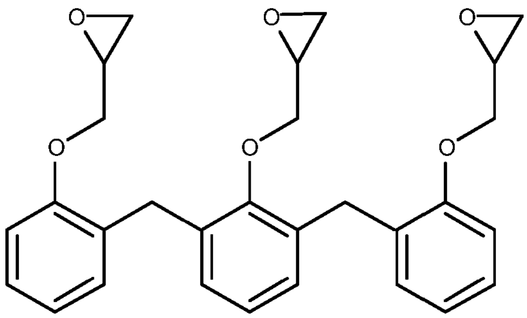

(II-2)

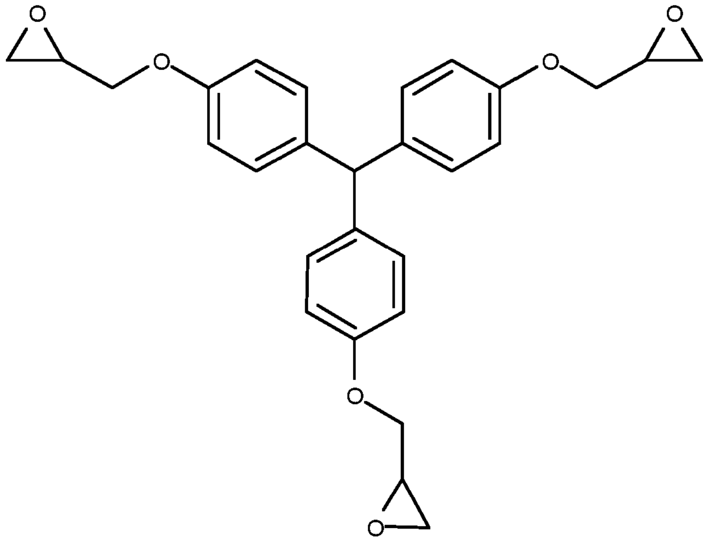

(II-3)

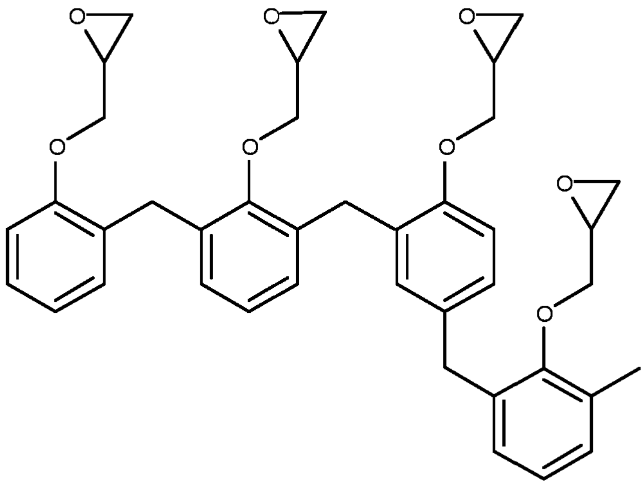

(II-4)

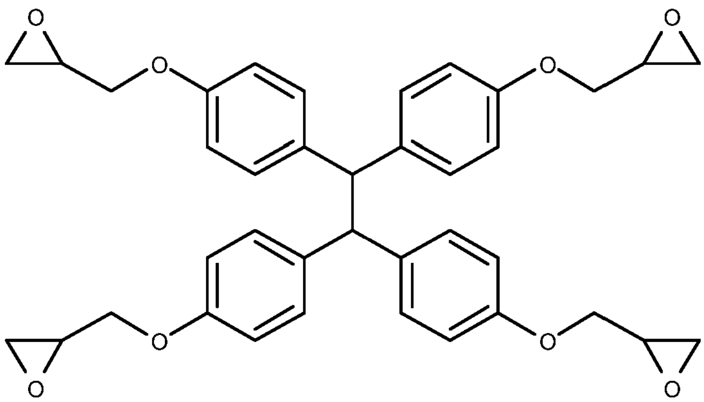

(II-5)

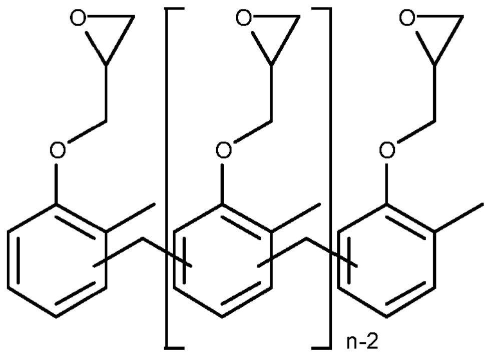

(II-6)

Wherein in (II-6) n represents the total number of phenolic epoxide groups with n having a range from 3 to 13.

Functionality ratio FR: For the reinforcing resin system in the rubber composition, a functionality ratio FR is defined as the mole ratio of the total linking functionality in the linking agent to the total available to-be-linked functionality in the phenolic resin.

For the system of phenolic epoxide and phenolic resin in the rubber composition, FR is defined as the mole ratio of the total epoxy groups in the phenolic epoxide (II) to the total hydroxyl groups in the phenolic resin (I). On the other hand, for the system of methylene donor and phenolic resin, which is not within this invention but may be used as a reference, FR is defined as the mole ratio of the total methylene functionality in the methylene donor to 2 times of the total available sites on the phenyl rings that are *otho*- and *para*- to the corresponding hydroxyl groups.

In the rubber composition of this invention, FR can be from 0.05 to 5; preferably from 0.1 to 3. Too small or too big a FR would leave abundant unreacted phenolic resin molecules or phenolic epoxide molecules in the system after curing, which could not only increase the cost of the rubber composition, but also negatively impact the rubber properties such as cured rigidity, cured hysteresis, cured elongation, and uncured viscosity.

In the rubber composition, if the phenolic resin and/or the phenolic epoxide have wide range of functionality distributions, as in the cases of the undermentioned phenolic resins and phenolic ECN1299 epoxide resins, an average FR is estimated based on the averages of the epoxy and phenol functionalities, respectively.

Other Components: There may be other components in the rubber composition, which are well known to those skilled in the art, for example, plasticizers. Plasticizers include oils, resins (from petroleum or other natural renewable resources, e.g., sunflower seeds, citrus orange peels). Processing oils are well known to one having ordinary skill in the art, are generally extracted from petroleum and are classified as being paraffinic, aromatic or naphthenic type processing oil, including MES and TDAE oils. Processing oils are also known to include, *inter alia,* plant-based oils, such as sunflower oil, rapeseed oil and vegetable oil. Some of the rubber compositions disclosed herein may include an elastomer, such as a styrene-butadiene rubber, that has been extended with one or more such processing oils but such oil is limited in the rubber composition of particular embodiments as being no more than 40 phr of the total elastomer content of the rubber composition.

The rubber compositions disclosed herein may further include, in addition to the compounds that are already described, all or part of the components often used in diene rubber compositions intended for the manufacture of tires, such as additional protective agents of the type that include antioxidants and/or antiozonants, such as 6PPD, 77PD, TMQ, hindered phenol, and wax. There may also be added, if desired, one or more conventional non-reinforcing fillers such as clays, bentonite, talc, chalk kaolin, aluminosilicate, fiber, or coal.

Production of the Rubber Composition: The rubber compositions that are embodiments of the present invention may be produced in suitable mixers in a manner known to those having ordinary skill in the art. Typically, the mixing may occur using two successive preparation phases, a first phase of thermo-mechanical working at high temperature followed by a second phase of mechanical working at a lower temperature.

The first phase, sometimes referred to as a "non-productive" phase, includes thoroughly mixing, typically by kneading, the various ingredients of the composition but excluding some of the vulcanization system such as the vulcanization agents, the phenolic epoxide, the accelerators, and the retarders. This first phase is carried out in a suitable kneading device, such as an internal mixer of the Banbury type, until under the action of the mechanical working and the high shearing imposed on the mixture, a maximum temperature of generally between 120°C and 190°C is reached, indicating that the components are well dispersed. Typically, this mixing time duration is less than 5 minutes.

After cooling the mixture, a second phase of mechanical working is implemented at a lower temperature. Sometimes referred to a "productive" phase, this finishing phase consists of incorporating some of the aforementioned vulcanization system and the phenolic epoxide that were not added in the "non-productive" phase using a suitable device, such as an open mill and an internal mixer. It is performed for an appropriate time (typically, for example, between 1 and 30 minutes or between 2 and 10 minutes), and at a sufficiently low temperature, i.e., lower than the vulcanization temperature

of the mixture, so as to protect against premature vulcanization. Note that depending on the reactivity of the phenolic epoxide, it can also be added in the first phase. However, it is preferable to add the phenolic epoxide to the second "productive" phase. For example, if the initiation temperature of the reaction of the phenolic resin and the phenolic epoxide is high, then the reaction would not begin at the conditions during the non-productive phase mixing.

The rubber composition can be formed into useful articles, including tire components. Tire treads, for example, may be formed as tread bands and then later made a part of a tire or they be formed directly onto a tire carcass by, for example, extrusion and then cured in a mold. Other components such as those located in the bead area of the tire or in the sidewall may be formed and assembled into an uncured tire and then cured with the curing of the tire.

Examples: The invention is further illustrated by the following examples, which are to be regarded only as illustrations and not delimitative of the invention in any way.

The phenolic resin chosen in the examples is a commercial product from the SI Group, which is a linear Novolac having a distribution of phenols in the precondensed product, as shown below, with a molecular weight distribution of 500-750 g/mol and less than 0.01 weight % formaldehyde.

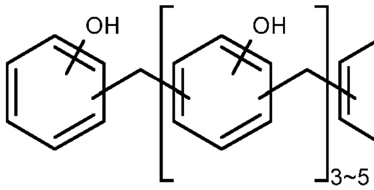

(3)

For the phenolic epoxide, two different chemicals were purposely chosen. One is EPON™ 1031 provided by Hexion, which is formaldehyde free, and composed of mainly the following tetra star phenolic epoxide with a molecular weight of 622 g/mol.

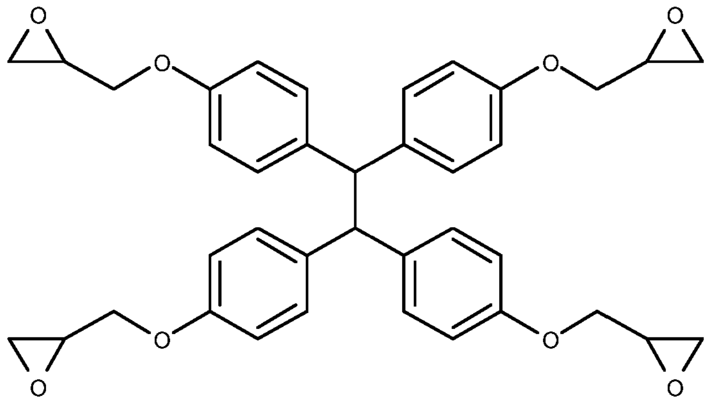

(II-5)

The other representative phenolic epoxide is ECN1299 resin, which is a linear Epoxy Cresol Novolac (ECN) resin having a distribution of phenolic epoxides in the pre-condensed product. This product was provided by Huntsman, with less than 0.1 weight % formaldehyde, and an average phenolic epoxy functionality of 5.4, as schematically shown below.

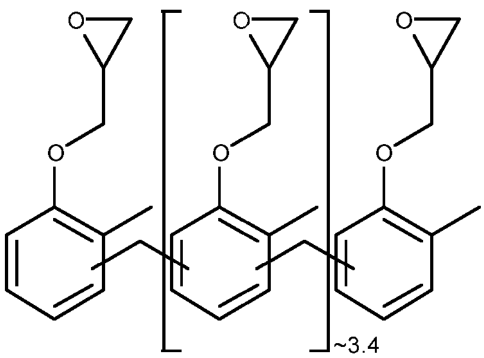

(4)

Example 1: This example shows the effectiveness of the phenolic epoxide and the phenolic resin in a 50/50 NR/BR blend rubber composition at a phenolic resin loading of 2 phr.

As can be seen in Table 1, compared to the traditional hexamethylenetetramine methylene donor, even at lower functionality ratio FR, both the ECN 1299 and the Epon 1031 provided comparable MA10 and Shore A rigidities at similar cured elongation and uncured viscosity.

Table 1

| **Example** | W1-1 | F1-1 | F1-2 |
|---|---|---|---|
| **Composition** | | | |
| Natural rubber | 50 | 50 | 50 |
| Polybutadiene rubber | 50 | 50 | 50 |
| N299 carbon black | 60 | 60 | 60 |
| Processing oil | 2 | 2 | 2 |
| Protection package | 10 | 10 | 10 |
| Vulcanization package | 8.25 | 8.25 | 8.25 |
| Phenolic resin | 2 | 2 | 2 |
| Hexamethylenetetramine | 0.65 | | |
| ECN1299 phenolic epoxide | | 2 | |
| EPON™ 1031 phenolic epoxide | | | 2 |
| Functionality ratio FR | 2.3 | 0.60 | 0.67 |
| **Properties** | | | |
| Mooney viscosity | 49.7 | 51.4 | 51.6 |
| Mooney scorch | 17.0 | 23.5 | 21.8 |
| Curing time at 150°C, min | 25 | 25 | 25 |
| MA10 | 6.8 | 6.5 | 6.2 |
| MA100 | 1.7 | 1.6 | 1.5 |
| HL60 | 38.5 | 40.6 | 42.2 |
| Break stress | 21 | 19 | 19 |
| Break elongation | 486 | 480 | 505 |

Example 2: This example compares the phenolic epoxide and the traditional hexamethylenetetramine methylene donor at a phenolic resin loading of 5 phr and the same functionality ratio FR in a 100% NR rubber composition.

As can be seen in *Table 2,* at the same FR, compared to hexamethylenetetramine, both the ECN 1299 and the Epon 1031 phenolic epoxides provided surprisingly higher MA10 and Shore A rigidities at comparable elongation and uncured Mooney viscosity. On the other hand, the higher hysteresis HL60 with the phenolic epoxides were also higher, which is a direct consequence of the high rigidity in such rubber compositions.

Table 2

| **Example** | W2-1 | F2-1 | F2-2 |
|---|---|---|---|
| **Composition** | | | |
| Natural rubber | 100 | 100 | 100 |
| N347 carbon black | 50 | 50 | 50 |
| Protection package | 2 | 2 | 2 |
| Vulcanization package | 5 | 5 | 5 |
| Phenolic resin | 5 | 5 | 5 |

(continued)

| Example | W2-1 | F2-1 | F2-2 |
|---|---|---|---|
| **Composition** | | | |
| Hexamethylenetetramine | 0.85 | | |
| ECN 1299 phenolic epoxide | | 8.4 | |
| EPON™ 1031 phenolic epoxide | | | 7.55 |
| Functionality ratio FR | 1 | 1 | 1 |
| **Physical properties** | | | |
| Mooney viscosity | 64.8 | 65.5 | 66.3 |
| Mooney scorch | 9.5 | 6.9 | 6.7 |
| Curing time at 150°C, min | 20 | 60 | 60 |
| MA10 | 8.9 | 18.4 | 13.9 |
| MA100 | 2.8 | 2.1 | 1.8 |
| Shore A | 74.8 | 83.5 | 78.4 |
| HL60 | 23.3 | 56.5 | 51.7 |
| Break stress | 27 | 13 | 13 |
| Break elongation | 383 | 321 | 344 |

Example 3: This example further demonstrates the rigidity boosting of the reinforcing resin system of this invention at phenolic resin loadings of 5, 10, and 15 phr at a constant FR value of 0.4 in a 100% NR rubber composition. For comparison purpose, boosting rigidity by increasing N347 carbon black loading was also included as a reference.

As can be seen in *Table 3,* compared to the comparative composition in W3-1, the use of the reinforcing resin system of phenolic epoxide and phenolic resin at 5, 10, and 15 phr (example F3-1, F3-2, and F3-3, respectively) at a constant functionality ratio FR increased the MA10 and Shore A rigidities without significant impact on uncured viscosities. In general, the higher the phenolic resin loading at the same FR, the higher the rigidity. Compared to increasing rigidity by N347 loading, at comparable rigidity level, increasing rigidity by the said reinforcing resin system provided significantly higher elongation and lower uncured viscosity. The higher elongation is an advantageous aspect for the cured endurance, and the lower viscosity is beneficial to the shaping and processability of the rubber compositions before curing.

Table 3

| Example | W3-1 | W3-2 | W3-3 | W3-4 | F3-1 | F3-2 | F3-3 |
|---|---|---|---|---|---|---|---|
| **Composition** | | | | | | | |
| Natural rubber | 100 | 100 | 100 | 100 | 100 | 100 | 100 |
| N347 carbon black | 50 | 60 | 70 | 80 | 50 | 50 | 50 |
| Protection | 2 | 2 | 2 | 2 | 2 | 2 | 2 |
| Vulcanization | 9 | 9 | 9 | 9 | 9 | 9 | 9 |
| Phenolic resin | | | | | 5 | 10 | 15 |
| EPON™ 1031 | | | | | 3 | 6 | 9 |
| Funct. ratio FR | | | | | 0.40 | 0.40 | 0.40 |
| **Properties** | | | | | | | |
| Mooney | 66.8 | 87.2 | 107.1 | 138.6 | 70.2 | 69.8 | 76.0 |
| Scorch | 9.1 | 8.2 | 6.3 | 4.6 | 12.7 | 6.4 | 4.8 |
| Curing time at 150°C, min | 15 | 15 | 15 | 15 | 25 | 60 | 60 |
| MA10 | 5.1 | 6.7 | 8.1 | 9.9 | 9.5 | 13.9 | 18.3 |

(continued)

| Properties | | | | | | | |
|---|---|---|---|---|---|---|---|
| MA100 | 2.5 | 3.3 | 4.2 | 5.3 | 2.2 | 1.9 | 2.2 |
| Shore A | 66.9 | 71.7 | 75.2 | 79.2 | 74.8 | 81.6 | 85.1 |
| HL60 | 15.8 | 19.8 | 22.6 | 27.2 | 32.0 | 49.6 | 63.9 |
| Break stress | 30 | 28 | 26 | 25 | 25 | 14 | 10 |
| Break elongation | 407 | 335 | 269 | 229 | 442 | 338 | 289 |

Example 4: This example further shows the rigidification of the reinforcing resin system at a constant phenolic resin loading of 5 phr but varying the functionality ratios at 0.13, 0.40, 0.67, 1.07 in a 100% NR rubber composition. As can be seen in Table 4, increasing the functionality ratio FR systematically increases the MA10 and Shore A rigidities without significant impact on the uncured viscosities, though the hysteresis is also increased, and the elongational properties could be reduced at higher FR.

Table 4

| Example | F4-1 | F4-2 | F4-3 | F4-4 |
|---|---|---|---|---|
| **Composition** | | | | |
| Natural rubber | 100 | 100 | 100 | 100 |
| N347 carbon black | 50 | 50 | 50 | 50 |
| Protection | 2 | 2 | 2 | 2 |
| Vulcanization | 9 | 9 | 9 | 9 |
| Phenolic resin | 5 | 5 | 5 | 5 |
| EPON™ 1031 | 1 | 3 | 5 | 8 |
| Functionality ratio FR | 0.13 | 0.40 | 0.67 | 1.07 |
| **Properties** | | | | |
| Mooney | 70.4 | 70.2 | 68.9 | 73.0 |
| Scorch | 10.2 | 12.7 | 9.1 | 6.7 |
| Curing time at 150°C, min | 15 | 25 | 25 | 25 |
| MA10 | 7.1 | 9.5 | 12.0 | 14.5 |
| MA100 | 2.3 | 2.2 | 2.1 | 2.0 |
| Shore A | 71.3 | 74.8 | 78.4 | 81.2 |
| HL60 | 25.0 | 32.0 | 39.8 | 52.3 |
| Break stress | 26 | 25 | 21 | 13 |
| Break elongation | 409 | 442 | 415 | 332 |

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

## Claims

**1.** A method of preparing a rubber product that is based upon a cross-linkable rubber composition comprising:

mixing together a non-productive mix comprising:

a highly unsaturated diene elastomer;
a reinforcing filler;
a reinforcing resin system comprising:
a phenolic resin having the following structure (I);

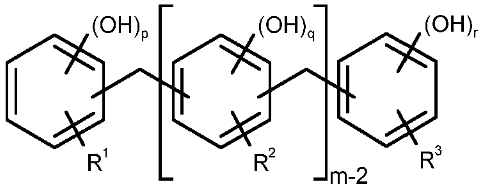

(I)

wherein p, q, r can be the same or different and are 1 or 2; m is 3 to 13; each of $R^1$, $R^2$, and $R^3$ can be the same or different, and is selected from of a hydrogen, an alkyl moiety, an alkenyl moiety, a cardanol moiety, or combinations thereof;

mixing together with the non-productive mix:

a phenolic epoxide having the following structure (II),

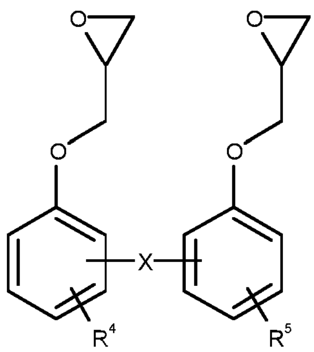

(II)

wherein X is selected from an alkyl moiety, an alkenyl moiety, an aryl moiety, a phenol moiety, a phenolic epoxide moiety, or
combinations thereof; $R^4$ and $R^5$ can be the same or different, and are selected from a hydrogen, an alkyl moiety, an alkenyl moiety, an aryl moiety, a phenol moiety, a phenolic epoxide moiety, or combinations thereof;;

wherein the functionality ratio, of the total epoxy groups in (II) to the total hydroxyl groups in (I) is from 0.05 to 5;
a vulcanization package; to convert the non-productive mix into a productive mix;

placing the rubber mix into a mold;
applying heat and pressure to the rubber mix to form a cured rubber article; and
removing the cured rubber article;
wherein no methylene donors are used that generate formaldehyde during curing.

**2.** The method according to claim 1, wherein the highly unsaturated diene elastomer is selected from NR, BR, SBR, or combinations thereof.

**3.** The method according to claim 1 or claim 2, wherein the filler is from 10 to 100 phr, and selected from a carbon black, a silica, or combinations thereof.

**4.** The method according to any one of the above claims, wherein phenolic resin is from 1 to 20 phr.

**5.** The rubber composition according to any one of the preceding claims, wherein the functionality ratio is a value in a range from 0.1 to 2.

**6.** The method according to any one of the above claims, wherein p, q, and r are all 1; m is from 4 to 12; $R^1$, $R^2$, and $R^3$ are all hydrogens.

**7.** The method according to any one of claims 1 through 5, wherein p, q, and r are all 2; m is from 4 to 12; $R^1$, $R^2$, and $R^3$ are all hydrogens.

**8.** The method according to any one of the preceding claims, wherein the phenolic epoxide has the following structure,

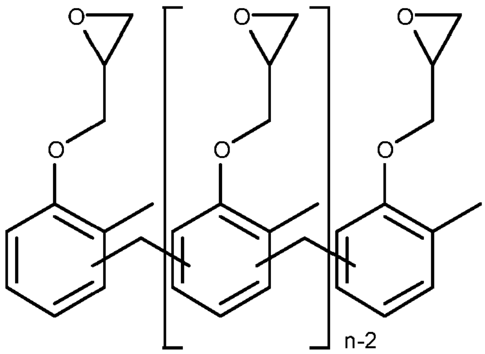

(II-6)

wherein the phenolic epoxide has an average phenolic epoxide functionality of 5.4.

**9.** The method according to any one of claims 1-7, wherein the phenolic epoxide has the following structure (II-5),

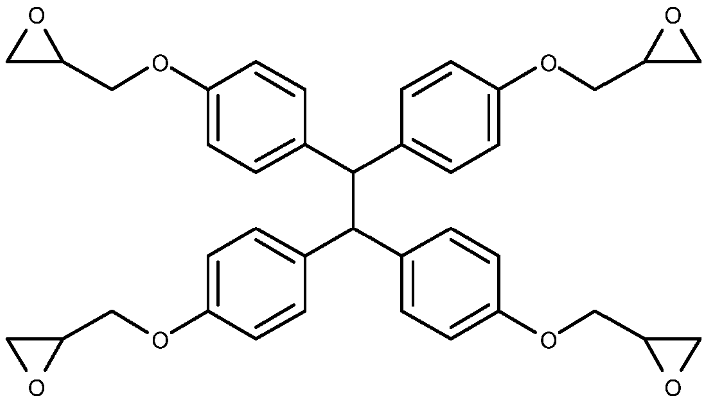

(II-5)

**10.** The method of any one of the above claims further comprising:
adding an antioxidant and or antiozonant chosen from the group consisting of 6PPD, 7PPD, TMQ, hindered phenol, wax or combinations thereof.

**11.** The method according to claim 10, wherein the cured rubber article is a tire and the rubber mix forms a tread portion of the tire.

**12.** The method according to claim 10, wherein the cured rubber article is a tire and the rubber mix forms a tire bead portion of the tire.

**13.** The method according to claim 10, wherein the cured rubber article is a tire and the rubber mix forms a belt skim portion of the tire.

**14.** A method of preparing a rubber product that is based upon a cross-linkable rubber composition comprising:
mixing together a non-productive mix comprising:

a highly unsaturated diene elastomer;
a reinforcing filler;

a reinforcing resin system comprising:

a phenolic resin having the following structure (I);

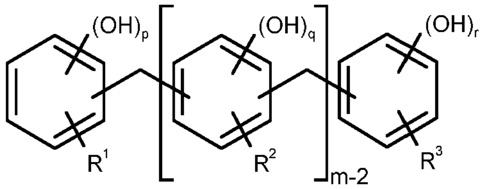

(I)

wherein p, q, r can be the same or different and are 1 or 2; m is 3 to 13; each of $R^1$, $R^2$, and $R^3$ can be the same or different, and is selected from of a hydrogen, an alkyl moiety, an alkenyl moiety, a cardanol moiety, or combinations thereof;
a phenolic epoxide having the following structure (II),

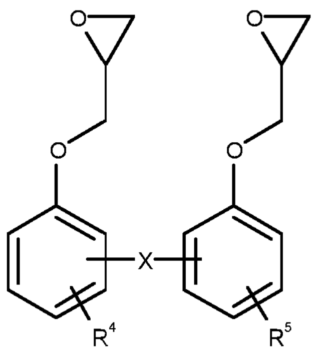

(II)

wherein X is selected from an alkyl moiety, an alkenyl moiety, an aryl moiety, a phenol moiety, a phenolic epoxide moiety, or combinations thereof; $R^4$ and $R^5$ can be the same or different, and are selected from a hydrogen, an alkyl moiety, an alkenyl moiety, an aryl moiety, a phenol moiety, a phenolic epoxide moiety, or combinations thereof;
wherein the functionality ratio, of the total epoxy groups in (II) to the total hydroxyl groups in (I) is from 0.05 to 5;

wherein no methylene donors are used that generate formaldehyde during curing.

**15.** The method according to claim 14 further comprising

mixing in a vulcanization package; to convert the non-productive mix into a productive mix;
placing the rubber mix into a mold;
applying heat and pressure to the rubber mix to form a cured rubber article; and
removing the cured rubber article.

**Patentansprüche**

**1.** Verfahren zur Herstellung eines Kautschukprodukts, das auf einer vernetzbaren Kautschukzusammensetzung basiert, mit den folgenden Schritten:

Zusammenmischen einer nichtproduktiven Mischung aus:

einem hoch ungesättigten Dienelastomer;
einem verstärkenden Füllstoff;
einem verstärkenden Harzsystem, das Folgendes umfasst:

ein Phenolharz mit der folgenden Struktur (I):

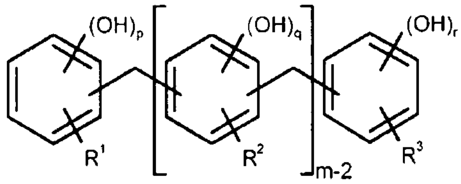

(I)

wobei p, q, r gleich oder verschieden sein können und 1 oder 2 sind; m 3 bis 13 ist; $R^1$, $R^2$ und $R^3$ jeweils gleich oder verschieden sein können und ausgewählt sind aus einem Wasserstoff, einem Alkylrest, einem Alkenylrest, einem Cardanolrest oder Kombinationen davon;

Zusammenmischen mit der nichtproduktiven Mischung:

ein phenolisches Epoxid mit der folgenden Struktur (II),

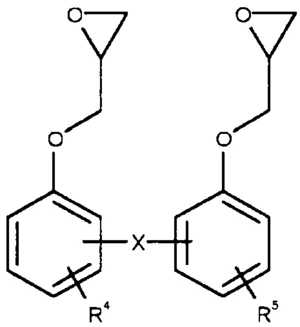

(II)

wobei X ausgewählt ist aus einem Alkylrest, einem Alkenylrest, einem Arylrest, einem Phenolrest, einem phenolischen Epoxidrest oder Kombinationen davon; $R^4$ und $R^5$ gleich oder verschieden sein können, und ausgewählt sind aus einem Wasserstoff, einem Alkylrest, einem Alkenylrest, einem Arylrest, einem Phenolrest, einem phenolischen Epoxidrest oder Kombinationen davon;
wobei das Funktionalitätsverhältnis der gesamten Epoxygruppen in (II) zu den gesamten Hydroxylgruppen in (I) 0,05 bis 5 beträgt;
ein Vulkanisationspaket, um die nichtproduktive Mischung in eine produktive Mischung zu verwandeln;

Einbringen der Kautschukmischung in eine Form;
Aufbringen von Hitze und Druck auf die Kautschukmischung, um einen Gegenstand aus gehärtetem Kautschuk zu bilden; und
Herausnehmen des Gegenstands aus gehärtetem Kautschuk;
wobei keine Methylen-Donatoren verwendet werden, um während des Aushärtens Formaldehyd zu erzeugen.

**2.** Verfahren nach Anspruch 1, wobei das hoch ungesättigte Dienelastomer ausgewählt ist aus NR, BR, SBR oder Kombinationen davon.

**3.** Verfahren nach Anspruch 1 oder Anspruch 2, wobei der Füllstoff von 10 bis 100 phr ausmacht und ausgewählt ist aus einem Ruß, einem Siliciumdioxid oder Kombinationen davon.

**4.** Verfahren nach einem der obigen Ansprüche, wobei Phenolharz von 1 bis 20 phr ausmacht.

**5.** Kautschukzusammensetzung nach einem der vorhergehenden Ansprüche, wobei das Funktionalitätsverhältnis ein Wert im Bereich von 0,1 bis 2 ist.

**6.** Verfahren nach einem der obigen Ansprüche, wobei p, q und r alle 1 sind; m von 4 bis 12 ist; $R^1$, $R^2$ und $R^3$ alle Wasserstoffe sind.

**7.** Verfahren nach einem der Ansprüche 1 bis 5, wobei p, q und r alle 2 sind; m von 4 bis 12 ist; $R^1$, $R^2$ und $R^3$ alle Wasserstoffe sind.

**8.** Verfahren nach einem der vorhergehenden Ansprüche, wobei das phenolische Epoxid die folgende Struktur besitzt:

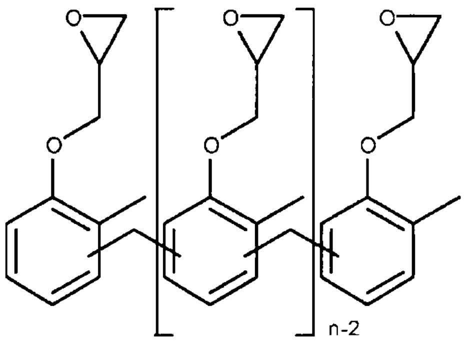

(II-6)

wobei das phenolische Epoxid eine durchschnittliche phenolische Epoxidfunktionalität von 5,4 besitzt.

**9.** Verfahren nach einem der Ansprüche 1 bis 7, wobei das phenolische Epoxid die folgende Struktur (II-5) besitzt:

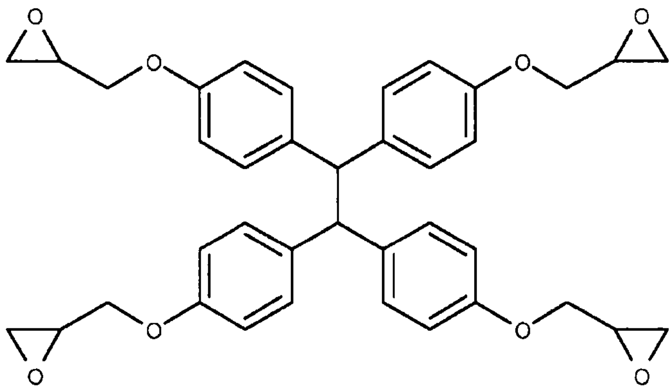

(II-5)

**10.** Verfahren nach einem der obigen Ansprüche, ferner mit dem folgenden Schritt:
Zugabe eines Antioxidationsmittels oder Ozonschutzmittels, das aus der aus 6PPD, 7PPD, TMQ, gehindertem Phenol, Wachs oder Kombinationen davon bestehenden Gruppe ausgewählt ist.

**11.** Verfahren nach Anspruch 10, wobei der Gegenstand aus gehärtetem Kautschuk ein Reifen ist und die Kautschukmischung einen Laufflächenabschnitt des Reifens bildet.

**12.** Verfahren nach Anspruch 10, wobei der Gegenstand aus gehärtetem Kautschuk ein Reifen ist und die Kautschukmischung einen Reifenwulstabschnitt des Reifens bildet.

**13.** Verfahren nach Anspruch 10, wobei der Gegenstand aus gehärtetem Kautschuk ein Reifen ist und die Kautschukmischung einen Gürtelabstreifabschnitt des Reifens bildet.

**14.** Verfahren zur Herstellung eines Kautschukprodukts, das auf einer vernetzbaren Kautschukzusammensetzung basiert, mit den folgenden Schritten:

Zusammenmischen einer nichtproduktiven Mischung aus:

einem hoch ungesättigten Dienelastomer;
einem verstärkenden Füllstoff;
einem verstärkenden Harzsystem, das Folgendes umfasst:

ein Phenolharz mit der folgenden Struktur (I):

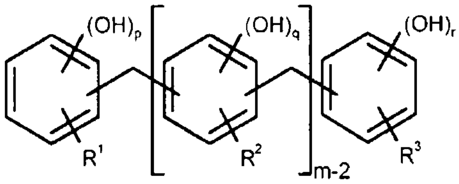

(I)

wobei p, q, r gleich oder verschieden sein können und 1 oder 2 sind; m 3 bis 13 ist; $R^1$, $R^2$ und $R^3$ jeweils gleich oder verschieden sein können und ausgewählt sind aus einem Wasserstoff, einem Alkylrest, einem Alkenylrest, einem Cardanolrest oder Kombinationen davon;

einem phenolischen Epoxid mit der folgenden Struktur (II),

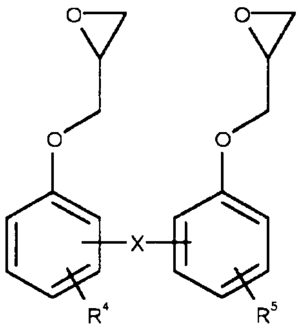

(II)

wobei X ausgewählt ist aus einem Alkylrest, einem Alkenylrest, einem Arylrest, einem Phenolrest, einem phenolischen Epoxidrest oder Kombinationen davon; $R^4$ und $R^5$ gleich oder verschieden sein können, und ausgewählt sind aus einem Wasserstoff, einem Alkylrest, einem Alkenylrest, einem Arylrest, einem Phenolrest, einem phenolischen Epoxidrest oder Kombinationen davon;
wobei das Funktionalitätsverhältnis der gesamten Epoxygruppen in (II) zu den gesamten Hydroxylgruppen in (I) 0,05 bis 5 beträgt;

wobei keine Methylen-Donatoren verwendet werden, die beim Aushärten Formaldehyd erzeugen.

**15.** Verfahren nach Anspruch 14, ferner mit den folgenden Schritten:

Mischen in einem Vulkanisationspaket, um die nichtproduktive Mischung in eine produktive Mischung zu verwandeln;
Einbringen der Kautschukmischung in eine Form;
Aufbringen von Hitze und Druck auf die Kautschukmischung, um einen Gegenstand aus gehärtetem Kautschuk zu bilden; und
Herausnehmen des Gegenstands aus gehärtetem Kautschuk.

## Revendications

**1.** Procédé de préparation d'un produit en caoutchouc qui est basé sur une composition de caoutchouc réticulable comprenant :
le mélange d'un mélange non productif comprenant :

un élastomère de diène hautement insaturé ;
une charge de renforcement ;
un système de résine de renforcement comprenant :

une résine phénolique ayant la structure (I) suivante ;

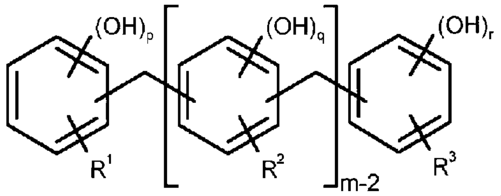

(I)

dans lequel p, q, r peuvent être identiques ou différents et sont 1 ou 2 ; m est 3 à 13 ; chacun de $R^1$, $R^2$, et $R^3$ peut être identique ou différent, et est choisi parmi un hydrogène, fraction alkyle, fraction alcényle, fraction de cardanol, ou des combinaisons de ceux-ci ;
le mélange avec le mélange non productif :

un époxyde phénolique ayant la structure (II) suivante,

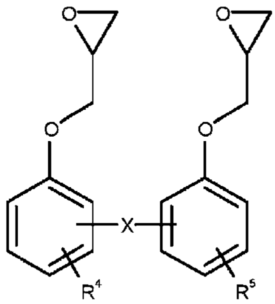

(II)

dans lequel X est choisi parmi une fraction alkyle, fraction alcényle, fraction aryle, fraction phénol, fraction époxyde phénolique, ou des combinaisons de celles-ci ; $R^4$ et $R^5$ peuvent être identiques ou différents, et sont choisis parmi un hydrogène, fraction alkyle, fraction alcényle, fraction aryle, fraction phénol, fraction époxyde phénolique, ou des combinaisons de ceux-ci ;
dans lequel le rapport de fonctionnalité, des groupes époxy totaux dans (II) aux groupes hydroxyle totaux dans (I) est de 0,05 à 5 ;
un boîtier de vulcanisation ; pour convertir le mélange non productif en un mélange productif ;
le placement du mélange de caoutchouc dans un moule ;
l'application de chaleur et de pression sur le mélange de caoutchouc pour former un article en caoutchouc durci ; et
le retrait de l'article en caoutchouc durci ;
dans lequel aucun donneur de méthylène qui génère du formaldéhyde pendant le durcissement n'est utilisé.

**2.** Procédé selon la revendication 1, dans lequel l'élastomère de diène hautement insaturé est choisi parmi NR, BR, SBR, ou leurs combinaisons.

**3.** Procédé selon la revendication 1 ou la revendication 2, dans lequel la charge est de 10 à 100 phr, et choisie parmi un noir de carbone, une silice, ou des combinaisons de ceux-ci.

**4.** Procédé selon l'une quelconque des revendications précédentes, dans lequel la résine phénolique est de 1 à 20 phr.

**5.** Composition de caoutchouc selon l'une quelconque des revendications précédentes, dans laquelle le rapport de fonctionnalité est une valeur dans une plage de 0,1 à 2.

**6.** Procédé selon l'une quelconque des revendications précédentes, dans lequel p, q et r sont tous 1 ; m est de 4 à 12 ; $R^1$, $R^2$et $R^3$ sont tous des hydrogènes.

**7.** Procédé selon l'une quelconque des revendications 1 à 5, dans lequel p, q et r sont tous 2 ; m est de 4 à 12 ; $R^1$, $R^2$et $R^3$ sont tous des hydrogènes.

**8.** Procédé selon l'une quelconque des revendications précédentes, dans lequel l'époxyde phénolique présente la

structure suivante,

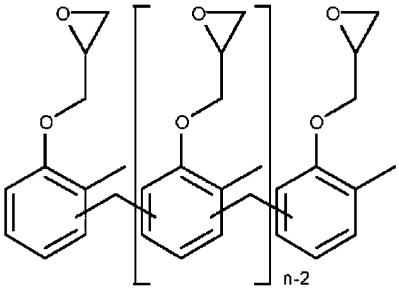

(II-6)

dans lequel l'époxyde phénolique a une fonctionnalité époxyde phénolique moyenne de 5,4.

**9.** Procédé selon l'une quelconque des revendications 1 à 7, dans lequel l'époxyde phénolique présente la structure (II-5) suivante,

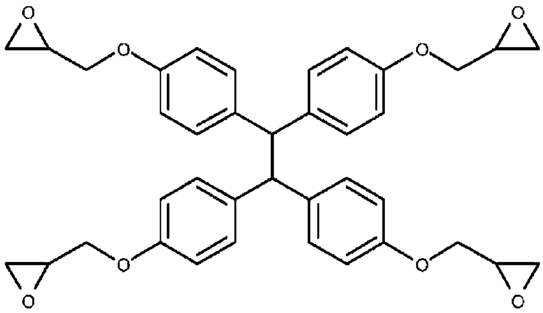

(II-5)

**10.** Procédé selon l'une quelconque des revendications précédentes, comprenant en outre :
l'ajout d'un antioxydant et/ou antiozonant choisi dans le groupe constitué par 6PPD, 7PPD, TMQ, phénol entravé, cire ou leurs combinaisons.

**11.** Procédé selon la revendication 10, dans lequel l'article en caoutchouc durci est un pneu et le mélange de caoutchouc forme une partie de bande de roulement du pneu.

**12.** Procédé selon la revendication 10, dans lequel l'article en caoutchouc durci est un pneu et le mélange de caoutchouc forme une partie de talon de pneu du pneu.

**13.** Procédé selon la revendication 10, dans lequel l'article en caoutchouc durci est un pneu et le mélange de caoutchouc forme une partie d'écrêtage de courroie du pneu.

**14.** Procédé de préparation d'un produit en caoutchouc qui est basé sur une composition de caoutchouc réticulable comprenant :
le mélange d'un mélange non productif comprenant :

un élastomère de diène hautement insaturé ;
une charge de renforcement ;
un système de résine de renforcement comprenant :

une résine phénolique ayant la structure (I) suivante ;

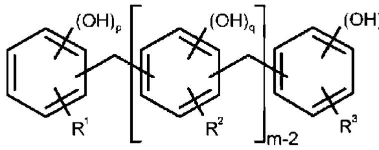

(I)

dans lequel p, q, r peuvent être identiques ou différents et sont 1 ou 2 ; m est 3 à 13 ; chacun de $R^1$, $R^2$, et $R^3$ peut être identique ou différent, et est choisi parmi un hydrogène, fraction alkyle, fraction alcényle, fraction de cardanol, ou des combinaisons de ceux-ci ;
un époxyde phénolique ayant la structure (II) suivante,

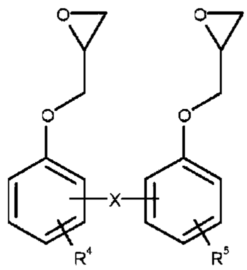

(II)

dans lequel X est choisi parmi une fraction alkyle, fraction alcényle, fraction aryle, fraction phénol, fraction époxyde phénolique, ou des combinaisons de celles-ci ; $R^4$ et $R^5$ peuvent être identiques ou différents, et sont choisis parmi un hydrogène, fraction alkyle, fraction alcényle, fraction aryle, fraction phénol, fraction époxyde phénolique, ou des combinaisons de ceux-ci ;
dans lequel le rapport de fonctionnalité, des groupes époxy totaux dans (II) aux groupes hydroxyle totaux dans (I) est de 0,05 à 5 ;
dans lequel aucun donneur de méthylène qui génère du formaldéhyde pendant le durcissement n'est utilisé.

**15.** Procédé selon la revendication 14, comprenant en outre :

le mélange dans un emballage de vulcanisation ; pour convertir le mélange non productif en un mélange productif ;
le placement du mélange de caoutchouc dans un moule ;
l'application de chaleur et de pression sur le mélange de caoutchouc pour former un article en caoutchouc durci ; et
le retrait de l'article en caoutchouc durci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8877839 B
- US 9975377 B
- CN 102690470
- EP 1854819 A
- JP 7039471 B
- EP 2582754 A


### Non-patent literature cited in the description


- **PETERS et al.** *Environ. Sci. Technol.*, 2018, vol. 52 (18), 10317-10327
- **KASEMSIRI et al.** *Polymers*, 2018, vol. 10 (5), 482